# EUROPEAN PATENT APPLICATION

(11) **EP 3 785 784 A1**
(43) Date of publication of application: **03.03.2021**
(21) Application number: 19382736.7
(22) Date of filing: 30.08.2019
(51) Int. Cl.: B01D 29/41, B01D 33/21, B01D 33/23

(54) **FILTERING PANEL FOR DISC FILTER DEVICE**

(71) Applicant: Sánchez Osma, Alonso, 08520 Les Franqueses del Vallès (ES)
(72) Inventor: Sánchez Osma, Alonso, 08520 Les Franqueses del Vallès (ES)
(74) Representative: Manresa Medina, José Manuel

(57) **Abstract**

Filtering panel for a disc filter of the type having a trapezoidal shape and comprising a filtering mesh (1) joined by its perimeter to a frame (2), **characterised in that:** it comprises at least one length-wise reinforcement (3) for each one of the faces of the filtering mesh (1) and at least one transversal reinforcement (4) for each one of the faces of the filtering mesh (1), which intersect, defining two areas, an upper area (5) comprising the smaller side (7) of the frame and a lower area (6) comprising the larger side (8) of the frame, the surface of the lower area (6) being greater than the surface of the upper area (5), the reinforcements (3,4) comprise first drains (9) for each one of the faces of the filtering mesh (1), which are arranged facing one another, and the filtering mesh is exposed (1) in those areas, and the inner perimeter of the frame (1) comprises an array of ribs (10) having second drains (12) for each one of the faces of the filtering mesh (1), which are arranged facing one another, and the filtering mesh is exposed (1) in those areas.

## Description

Filtering panel for a disc filter of the type having a trapezoidal shape comprising a filtering mesh joined by its perimeter to a frame; characterised in that: it comprises at least one length-wise reinforcement for each face of the filtering mesh and at least one transversal reinforcement for each face of the filtering mesh; said reinforcements intersecting and defining two areas: the upper area that comprises the smaller side of the frame, and the lower area that comprises the larger side of the frame, wherein the surface of the lower area is larger than the surface of the upper area, and wherein the reinforcements comprise first drains in each face of the filtering mesh, which are arranged facing one another, exposing the filtering mesh in these areas, and wherein the inner perimeter of the frame comprises a series of ribs with second drains for each face of the filtering mesh, which are arranged facing one another, exposing the filtering mesh in such areas, and wherein the different elements occupy different filtering areas of the panel: the lower area occupies approximately 45-55% of the total, the upper area occupies approximately 38-47% of the total, the first drains approximately 2,5%-4% of the total, and the second drains approximately 2,5-4% of the total.

### BACKGROUND OF THE INVENTION

Different disc filters comprising filtering panels are known in the state of the art.

The applicant firm manufactures a machine called "ROTADISC," which performs the filtering by means of a series of discs arranged consecutively; it is through said discs that the water is filtered as it passes through them; when the water reaches the last of the discs, it is already filtered.

Each one of the discs is made up of a series of removable filtering panels.

Such panels comprise a filtering mesh, having its perimeter covered by a frame, such frame fitting within the respective disc.

### BRIEF DESCRIPTION OF THE INVENTION

The present invention falls within the field of filtering machines for tertiary treatment.

The closest document is the filtering panel now used with the disc filters of the ROTADISC machine.

Such device has the advantage of allowing filtering large quantities of water because the mesh occupies almost all the frame.

The problem is that due to the pressure exerted by the water on the filtering mesh, said filtering mesh is bent and the efficiency of the panel decreases as it becomes deformed due to said pressure, and may even tear with time, which will cause stops in the equipment operation.

Thus, the inventor has designed a new panel wherein the resistance of the filtering mesh is strengthened by certain reinforcements, one length-wise and one transversal, which reinforcements intersect, being the lower area larger than the upper area because it is in the perimeter area of the machine where most water accumulates and therefore this is the area from where more liquid needs to be evacuated.

In the further example, besides the lower area and the upper area, there is an intermediate area having a surface that is greater than the upper area, but at the same time smaller than the lower area, for the same reasons above stated.

This implies an increased duration of the filtering panels, since they are not affected by the bending of the filtering mesh because bending as a consequence of the water or the liquid diminishes or is eliminated, thus increasing the reliability of the equipment comprising the disc filters, which no longer need to be stopped, all of which causes less repair and spare part costs.

The investor has been able to verify that if the sizes are within the limits stated in claims 1 and 4 hereof, the mentioned advantages and improvements occur.

An object of this invention is a filtering panel for a disc filter, of the type having a trapezoidal shape, comprising a filtering mesh joined by its perimeter to a frame, characterised in that: it comprises at least one longitudinal reinforcement for each face of the filtering mesh and at least one transversal reinforcement for each face of the filtering mesh, which reinforcements intersect and define two areas, one upper area comprising the smaller side of the frame and one lower area comprising the larger side of the frame, the surface of the lower area being larger than the surface of the upper area because the reinforcements comprise first drains for each face of the filtering mesh, which are arranged facing one another, and the filtering mesh is exposed in those areas, and in that the inner perimeter of the frame comprises an array of ribs having second drains in each face of the filtering mesh, which drains stand facing one another, and the filtering mesh is exposed in those areas, the different elements occupy the following filtering areas of the panel: the lower area occupies approximately 45-55% of the total, the upper area occupies approximately 38-47% of the total, the first drains occupy approximately 2,5%-4% of the total, and the second drains occupy approximately 2,5-4% of the total.

An additional object hereof is a filtering panel for a disc filter of the type having a trapezoidal shape and comprising a filtering mesh joined at its perimeter to a frame, characterised in that: it comprises at least a longitudinal reinforcement in each face of the filter mesh and at least two transversal reinforcements in each face of the filtering mesh, which reinforcements intersect and define three areas, one upper area comprising the smaller side of the frame, one lower comprising the larger side of the frame, and an intermediate area that is located between the upper and the lower one, the surface of the lower area being larger than the surface of the intermediate area, and the surface of the intermediate area being larger than the surface of the upper area, because the reinforcements comprise first drains for each face of the filtering mesh, which stand facing one another, and the filtering mesh is exposed in those areas; and the internal perimeter of the frame comprises a series of ribs having second drains in each face of the filtering mesh, which stand facing one another, and the filtering mesh is exposed in those areas; the different elements occupying the following filtering areas of the panel: the lower area occupies approximately 32-42% of the total, the intermediate area occupies approximately 25-35% of the total, the upper area occupies approximately 20-28% of the total, the first drains occupy approximately 2,5%-4% of the total, and the second drains occupy approximately 2,5-4% of the total.

### BRIEF DESCRIPTION OF THE DRAWINGS

In order to facilitate the explanation, two sheets of drawings are attached hereto which are representative of practical embodiments, are included as examples and not are intended to limit the scope of the present invention:
- Fig. 1 it is a plan view of the invention showing a configuration with four filtering areas, and
- Fig. 2 is a plan view of the invention showing a configuration with six filtering areas.

### SPECIFIC EMBODIMENT OF THE PRESENT INVENTION

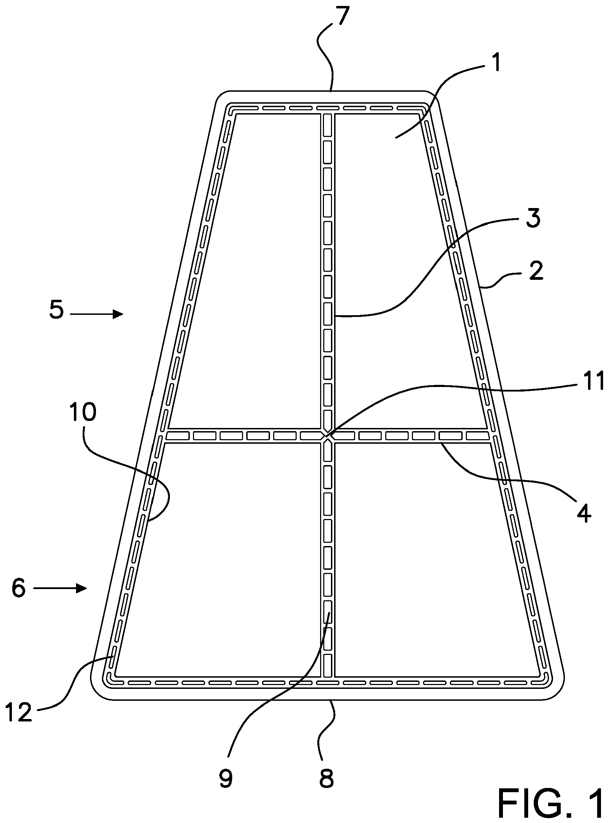

Thus, Fig. 1 shows a filtering mesh 1, a frame 2 having a larger side 8 and a smaller side 7, a length-wise reinforcement 3, a transversal reinforcement 4, a central support 11, first drains 9, an upper area 5, a lower area 6, and ribs 10 having the second drains 12.

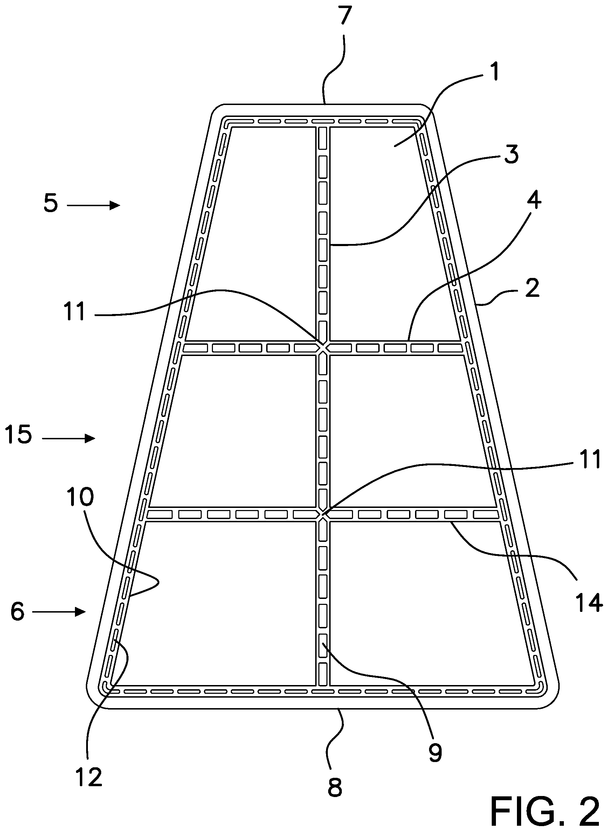

Further, Fig. 2 illustrates the filtering mesh 1, the frame 2 having a larger side 8 and a smaller side 7, the length-wise reinforcement 3, the transversal reinforcements 4, 14, the central supports 11, the first drains 9, the upper area 5, the intermediate area 15, the lower area 6, and the ribs 10 having the second drains 12.

Thus, in a specific embodiment, the filtering panel for a disc filter has the trapezoidal shape as shown in the two enclosed figures. This is determined by the shape of the disc where the panel is fit, as explained before.

The panel comprises a filtering mesh 1, where the water or fluid passes; the panel is joined to a frame 2 by its perimeter, such frame 2 will accommodate the filter disc.

The panel comprises at least one length-wise reinforcement 3 for each of the faces of the filtering mesh 1, and at least one transversal reinforcement 4 for each of the faces of the filtering mesh 1. Fig. 1 shows an embodiment having only one transversal reinforcement 4, and Fig. 2 shows a variant having two transversal reinforcements 4, 14.

Said reinforcements 3, 4,1 4 being placed on each face, prevent that filtering mesh 1 bends and, additionally, prevent the filtering mesh 1 from deforming due to the pressure exerted by the water or the fluid. Another advantage is that said mesh 1 will not tear due to the pressure of the water or the liquid, which increases its durability.

In addition, said reinforcements 3, 4, 14 intersect and cross each other at a certain point, the central support 11, which confers rigidity to the reinforces 3, 4, 14 and to the filtering mesh 1.

Thus, two areas are defined in Fig. 1, an upper area 5 comprising the smaller side 7 of the frame and a lower area 6 comprising the larger side 8 of the frame, being the surface of the lower area 6 larger than the surface of the upper area 5.

This is so because by the action of the centrifugal force, when the disc rotates, more fluid to be filtered accumulates in the area which is nearest to the perimeter, i.e., the area corresponding to the larger side 8; in this way the filtering surface where most of the fluid needs to be evacuated increases.

Fig. 2 defines three areas. The panel is larger than in Fig. 1, comprising also the upper area 5 with the smaller side 7 of the frame and the lower area 6 with the larger side 8 of the frame, being the surface of the lower area 6 greater of the surface of the intermediate area 15, and the surface of the intermediate area 15 being greater than the surface of the upper area 5.

This is so for the same reason previously explained, i.e., due to the centrifugal force when the disc rotates, more fluid accumulates that has to be filtered in the area that is closest to the perimeter, that is, the area of the larger side 8, whereas the area closest to the axis, the smaller side 7, is where less fluid accumulates. It follows that the surface of the lower area should be larger than the other two surfaces in order to filter the excess of fluid, and the same is true for the intermediate area 15 in relation to the lower area.

To increase the filtering surface, it has been provided that the reinforcements 3, 4, 14 will comprise the first drains 9 for each of the faces of the filtering mesh 1, which stand facing one another, and the filtering mesh is exposed 1 in those areas. In this way, the water or fluid will also be filtered through the area where the reinforcements 3, 4, 14 are arranged, thus increasing the filtering surface.

In addition, the inner perimeter of the frame 1 has also been provided with an array of ribs 10 on each face of the filtering mesh 1, having second drains 12, which on the one hand provide increased rigidity to the filtering mesh 1 by preventing it from separating from the frame 2, and also increase the filtering surface by allowing the water to pass through the second drains 12 that are arranged on each of the faces of the filtering mesh 1, standing facing one another, thus exposing the filtering mesh in those areas.

The same as with the first drains 9, the ribs 10 area will also allow the water or fluid to be filtered, thus increasing the filtering surface.

Optionally, as above explained, in order to confer greater rigidity to the reinforcements 3, 4, 14 a central support 11 has been arranged in the intersection of the reinforcements 3, 4,14, so that this central point, being additionally reinforced, confers more rigidity to the two reinforcements 3,4,14 to better withstand the pressure generated by the water or the fluid.

In an optional embodiment, the frame 2 is made of metal coated with overinjected plastic and has a rubber being arranged over said overinjected plastic. The advantage of overinjecting plastic is that it solves the problem of the filtering mesh detaching from the frame 2. In this manner, the plastic holds the filtering mesh 1 in place and prevents detachment from the frame 2. In addition, the rubber facilitates adjusting the frame 2 and fitting well when installing it in the disc filter.

In the case shown in Fig. 1, the distribution of the filtering areas is as follows:
- the lower area 6 would occupy approximately 45-55% of the total,
- the upper area 5 would occupy about 38-47% of the total,
- the first drains 9 would occupy approximately 2,5%- 4% of the total, and
- the second drains 12 would occupy approximately 2,5-4% of the total.

In the case shown in Fig. 2, the distribution of the filtering areas is as follows:
- the lower area 6 would occupy approximately 32-42% of the total,
- the intermediate area 15 would occupy approximately 25-35% of the total,
- the upper area 5 would occupy approximately 20-28% of the total,
- the first drains 9 would occupy approximately 2,5%- 4% of the total, and
- the second drains 12 would occupy approximately 2,5-4% of the total.

The following are some examples of embodiments of the panels according to Fig. 1 and Fig. 2. The percentages (%) are approximate or rounded up to two decimals.

That is to say, for a panel having a total filtering area of 0,24308 m², of the type illustrated in Fig. 1, the surface and proportions we would have in the following embodiment would be:

| | Surface | % of the total |
|---|---|---|
| Lower area 6 | 0,12328 | 50,72 |
| Upper area 5 | 0,10576 | 43,51 |
| First drains 9 | 0,00698 | 2,87 |
| Second drains 12 | 0,00706 | 2,90 |

In an additional panel arranged in a total filtering area of 0,15094 m², of the type shown in Fig. 1, the surface and proportions we would have in the following embodiment are the following:

| | Surface | % of the total |
|---|---|---|
| Lower area 6 | 0,07500 | 49,68 |
| Upper area 5 | 0,06520 | 43,20 |
| First drains 9 | 0,00532 | 3,53 |
| Second drains 12 | 0,00542 | 3,59 |

Last, in a panel having a total filtering area of 0,35180 m², of the type illustrated in Fig. 2, the surface and the proportions we would have in the following embodiment would be the following:

| | Surface | % of the total |
|---|---|---|
| Lower area 6 | 0,13160 | 37,42 |
| Intermediate area 15 | 0,11026 | 31,32 |
| Upper area 5 | 0,08774 | 24,94 |
| First drains 9 | 0,01159 | 3,30 |
| Second drains 12 | 0,01061 | 3,02 |

It should be understood that, depending on the final panel sizes, the proportions may vary within the above-stated ranges.

The present invention describes a new filtering panel for a disc filter. The examples herein provided are not limitative of the present invention, which may have different applications and/or adaptations, all of which within the scope of the following claims.

## Claims

1. Filtering panel for a disc filter, of the type having a trapezoidal shape, comprising a filtering mesh (1) joined by its perimeter to a frame (2), **characterised in that:**
- it comprises at least one length-wise reinforcement (3) for each one of the faces of the filtering mesh (1) and at least one transversal reinforcement (4) for each one of the faces of the filtering mesh (1), which reinforcements intersect and define two areas: one upper area (5) comprising the smaller side (7) of the frame, and one lower area (6) comprising the larger side (8) of the frame, being the surface of the lower area (6) larger than the surface of the upper area (5),
- the reinforcements (3, 4) comprise first drains (9) for each one of the faces of the filtering mesh (1), which are arranged facing one another, and the filtering mesh is exposed (1) in those areas, and
- the inner perimeter of the frame (2) comprises an array of ribs (10) having second drains (12) for each one of the faces of the filtering mesh (1), which are arranged facing one another, and the filtering mesh is exposed (1) in those areas,
the different elements occupy the following filtering areas in the panel:
- the lower area (6) approximately 45-55% of the total,
- the upper area (5) approximately 38-47% of the total
- the first drains (9) approximately 2,5%-4% of the total, and
- the second drains (12) approximately 2,5-4% of the total.

2. Filtering panel according to claim 1, **characterised in that** it comprises a central support (11) in the intersection of the reinforcements (3,4).

3. Filtering panel according to claim 1, **characterised in that** the frame (2) is metallic and is coated with an overinjected plastic, and has a rubber arranged over said overinjected plastic.

4. Filtering panel for a disc filter, of the type having a trapezoidal shape and comprising a filtering mesh (1) joined by its perimeter to a frame (2), **characterised in that:**
- it comprises at least a length-wise reinforcement (3) for each one of the faces of the filtering mesh (1) and at least two transversals reinforcements (4, 14) for each one of the faces of the filtering mesh (1), which reinforcements intersect and define three areas: an upper area (5) comprising the smaller side (7) of the frame, a lower area (6) comprising the larger side (8) of the frame, and an intermediate area (15) located between the upper (5) and the lower (6) areas, the surface of the lower area (6) being larger than the surface of the intermediate area (15), and the surface of the intermediate area (15) being larger than the surface of the upper area (5)
- the reinforcements (3,4,14) comprise first drains (9) for each one of the faces of the filtering mesh (1), which stand facing one another, and the filtering mesh is exposed (1) in those areas, and
- the inner perimeter of the frame (1) comprises an array of ribs (10) having second drains (12) for each one of the faces of the filtering mesh (1), which stand facing one another, and the filtering mesh is exposed (1) in those areas,
the different elements occupy the following filtering areas of the panel:
- the lower area (6) approximately 32-42% of the total,
- the intermediate area (15) approximately 25-35% of the total,
- the upper area (5) approximately 20-28% of the total,
- the first drains (9) approximately 2,5%-4% of the total, y
- the second drains (12) approximately 2,5-4% of the total.

5. Filtering panel according to claim 4, **characterised in that** it comprises a central support (11) in the intersection of the reinforcements (3,4,14).

6. Filtering panel according to claim 4, **characterised in that** the frame (2) is made of metal coated by an overinjected plastic and has a rubber placed above said overinjected plastic.
